# EUROPÄISCHE PATENTSCHRIFT

(11) **EP 3 037 239 B1**
(45) Veröffentlichungstag und Bekanntmachung des Hinweises auf die Patenterteilung: **06.03.2019**
(21) Anmeldenummer: 15153272.8
(22) Anmeldetag: 30.01.2015
(51) Int. Cl.: B29C 45/00, B29C 45/14, B29C 43/00

(54) **Verfahren zur Herstellung von Fahrzeugbauteilen/Strukturbauteilen aus einem Kunststoffmaterial sowie derart hergestelltes Fahrzeug- oder Strukturbauteil**
Method for the production of parts for motor vehicles/structural components from a plastic material and vehicle or structural component
Procédé de fabrication de composants de véhicule/composants structuraux en matière synthétique et composants de véhicule ou composants structuraux en matière synthétique

(30) Priorität: 22.12.2014 EP 14199856
(43) Veröffentlichungstag der Anmeldung: 29.06.2016
(73) Patentinhaber: Magna Steyr Fahrzeugtechnik AG & Co KG, 8041 Graz (AT)
(72) Erfinder: Dietz, Wolfgang, 8081 Pirching (AT); Wolfsberger, Günter, 8501 Lieboch (AT)
(74) Vertreter: Zangger, Bernd

(56) Entgegenhaltungen:
- DE-A1-102005 039 124
- DE-A1-102013 209 078
- DE-A1-102014 200 095
- US-A1- 2006 284 330
- US-A1- 2014 361 455
- US-B2- 7 445 744
- Dr.-Ing Karin Spors ET AL: "Aufbau eines funktionsorientierten Bezugspunktsystems als Tolerierungsbasis für eine Pkw-Karosserie", , 15. Oktober 1998 (1998-10-15), XP055189360, Gefunden im Internet: URL:https://www.designsociety.org/publicat ion/27491/aufbau_eines_funktionsorientiert en_bezugspunktsystems_als_tolerierungsbasi s_f%C3%BCr_eine_pkw-karosserie [gefunden am 2015-05-15]

## Beschreibung

Die Erfindung betrifft ein Verfahren zur Herstellung von Fahrzeugbauteilen oder Strukturbauteilen aus einem Kunststoffmaterial.

Bei der Herstellung und Montage von Fahrzeugbauteilen im Automobilbau ist es mittlerweile üblich zur Gewährleistung einer prozesssicheren und wiederholgenauen Positionierung der Fahrzeugbauteile und Baugruppen ein sogenanntes Bezugspunktsystem anzuwenden. Ein derartiges Bezugspunktsystem ist unter der Bezeichnung Referenz-Punkt System (RPS) bekannt. Dieses Bezugspunktkonzept ermöglicht eine eindeutige und reproduzierbare Positionierung von Einzelteilen, Baugruppen am Gesamtfahrzeug. Hierdurch können insbesondere Toleranzen der Fahrzeugbauteile / Baugruppen zueinander abgestimmt und eine reproduzierbare Lage der Fahrzeugbauteile über das gesamte Herstellungsverfahren erreicht werden. Die Grundlage dieses RPS ist die Festlegung bestimmter Punktpositionen (Referenzpunkte) an den Fahrzeugbauteilen um hierdurch die Bezugsebenen zu definieren. Dem Referenz-Punkt-System (RPS) zugrunde liegt ein Fahrzeugkoordinatensystem, das seinen Ursprung mittig auf Höhe der Vorderachse eines Fahrzeuges hat. Die Referenzpunkte eines entsprechenden Fahrzeugbauteils bilden zum einen ein bauteilorientiertes Koordinatensystem, welches für das Herstellverfahren des Fahrzeugbauteils von Bedeutung ist, zum anderen wird die Lage des Fahrzeugbauteils in Bezug auf andere Fahrzeugbauteile sowie im Fahrzeugkoordinatensystem festgelegt. Die Definition der Bezugsebenen erfolgt über geometrische Elemente wie Bohrungen, Kanten oder Punkte auf Flächenelementen. Damit die Bezugsebenen eindeutig definiert sind, müssen alle sechs Freiheitsgrade über die geometrischen Elemente an dem entsprechenden Fahrzeugbauteil festgelegt werden. Der Aufbau eines funktionsorientierten Bezugspunktsystems an dem Beispiel einer PKW Tür kann dem Artikel "Aufbau eines funktionsorientierten Bezugspunktsystems als Tolerierungsbasis für eine PKW-Karosserie", Dr.-Ing. Karin Spors, Dipl.-Ing Heiko Hennig, 9. Symposium "Fertigungstechnisches Konstruieren" entnommen werden.

Aus der DE 100 48 774 B4 ist ein Türmodul und ein Verfahren zur Montage des Türmoduls bekannt. Das Türmodul umfasst dabei den Türmodulträger sowie den zentralen Teil der Türinnenverkleidung. Die Türinnenverkleidung weist eine Funktionseinheit auf, wobei in der Funktionseinheit Referenzpunkte des RPS zur positionsgenauen Montage der Bauteile vorgesehen sind. Diese Referenzpunkte sind als Bohrungen ausgeführt. Weiterhin ist aus der DE 10 2006 002 815 A1 eine Fahrzeugtür und ein Verfahren zu deren Montage mit einem RPS bekannt. Die Referenzpunkte des RPS werden durch Bolzen-Loch Paarungen ausgebildet. Durch das RPS wird die Funktionslage der Trägerplatte an dem Türinnenblech definiert und gesichert.

Die aus den vorgenannten Druckschriften bekannten Fahrzeugbauteile sind als Kunststoffbauteile bzw. Metallbauteile ausgeführt, in die die als Bohrungen ausgeführten Referenzpunkte durch Bohren oder Fräsen eingebracht sind. Mittlerweile werden im Automobilbau für Fahrzeugbauteile auch faserverstärkte Kunststoffe eingesetzt. Dieser Faser-Kunststoff-Verbund ist ein Werkstoff, der aus Verstärkungsfasern und einer Kunststoffmatrix besteht. Aufgrund der geringen Dichte des Werkstoffs sowie der außergewöhnlichen mechanischen Eigenschaften wird dieser Werkstoff für viele Fahrzeugbauteile eingesetzt. Ein Einbringen von Bohrungen oder Ausnehmungen in diesen Werkstoffen würde allerdings eine Zerstörung der Fasern und somit eine Schwächung des Fahrzeugbauteils bewirken. Derzeit werden Faserverbundbauteile hauptsächlich durch ihre Form und Geometrie für weitere Bearbeitungsschritte positioniert. Dies erfolgt häufig mittels manueller Arbeitsschritte was einen hohen Aufwand und eine nicht exakte Reproduzierbarkeit darstellt.

Aus der US 2014/361455 A1 ist ein Verfahren zur Herstellung von Fahrzeugbauteilen und/ oder Strukturbauteilen aus einem Kunststoffmaterial bekannt, wobei das Kunststoffmaterial ein Faserverbundwerkstoff ist, wobei die Fahrzeugbauteile als flächige Formteile ausgestaltet sind, wobei die Fahrzeugbauteile bzw. Strukturbauteile geeignet zur Positionierung bei der Herstellung und/oder Positionierung bei der Montage mit weiteren Fahrzeugbauteilen und/oder Positionierung im Kraftfahrzeug ein Bezugspunktsystem (RPS) aufweisen, wobei dieses durch eine Vielzahl von Referenzpunkten (RP1, RP2, RP3) gebildet wird, wobei die Referenzpunkte (RP1, RP2, RP3) des Bezugspunktsystems bei der formgebenden Herstellung des Fahrzeugbauteils erzeugt werden, in einer Werkzeugform zur Herstellung der Fahrzeugbauteile und Strukturbauteile.

Aufgabe der vorliegenden Erfindung ist es daher, ein Verfahren zur Herstellung von Fahrzeugbauteilen/Strukturbauteilen und dergleichen bereitzustellen, welches einfach ist und insbesondere eine einfache und genaue Positionierung der Fahrzeugbauteile bzw. Strukturbauteile bei dem Herstellverfahren und bei der Montage gewährleistet und wobei bei den herzustellenden Fahrzeugbauteilen bzw. Strukturbauteilen sowohl aus Kunststoffmaterialien als auch aus Faserbundwerkstoffen die Gefahr von Strukturschwächungen reduziert wird. Des Weiteren ist es unter einem weiteren Aspekt eine Aufgabe ein Fahrzeugbauteil bereitzustellen, welches sowohl bei der Herstellung als auch bei der weiteren Montage einfach und exakt zu positionieren ist.

Diese Aufgabe wird durch die im Patentanspruch 1 angegebenen Merkmale gelöst.

Die Aufgabe wird unter dem weiteren Aspekt durch die im Patentanspruch 9 angegebenen Merkmale gelöst.

Durch das erfindungsgemäße Verfahren zur Herstellung von Fahrzeugbauteilen und Strukturbauteilen aus einem Kunststoffmaterial, wobei die Fahrzeugbauteile eine Vielzahl von Referenzpunkten aufweisen, ist es möglich die Fahrzeugbauteile bei den Herstellverfahren in den entsprechenden Werkzeugen und Aufnahmen der einzelnen Bearbeitungsschritte durch das Referenz-Punkt-System schnell und reproduzierbar zu positionieren. Dies ist dadurch möglich, da die Referenzpunkte bereits bei der Bauteilherstellung generiert werden, vorzugsweise im Werkzeug bzw. der Werkzeugform des formgebenden Prozesses zur Herstellung des Fahrzeugbauteils aus einem Kunststoffmaterial erzeugt werden. Des Weiteren ist durch die Referenzpunkte am hergestellten oder halbfertiggestellten Fahrzeugbauteil über das Referenzpunktsystems eine zuverlässige Positionierung im Prozess der Herstellung eines Bauteiles und / oder im weiteren Prozess der Montage einer Baugruppe oder der Montage oder Positionierung einer Baugruppe am Gesamtfahrzeug möglich. Für sowohl die Herstellung als auch für die Montage können die gleichen Referenzpunkte verwendet werden. Die Positionierung in der X/Y/Z Ebene anhand der Referenzpunkte erlauben eine einheitliche und prozesssichere Positionierung der Fahrzeugbauteile in einem vollautomatisierten Herstellprozess. Beispielhaft werden als Prozessschritte Verpressung bei Aushärtung, Positionierung bei Kontur- oder Fräsbearbeitung, Positionierung von Verklebung/Verbindungs-/Assemblierungsschritte zueinander-Positionierung des Fahrzeugbauteils ins Gesamtfahrzeug genannt. Wie es aus der Darstellung zu einem Ausführungsbeispiel ersichtlich ist, sind vorzugsweise 3 Referenzpunkte am Fahrzeugbauteil vorgesehen.

Fahrzeugbauteile bzw. Strukturbauteile sind flächig ausgeführt und weisen eine plane oder durch das jeweilige Design vorgegebene dreidimensionale Kontur auf. Unter Fahrzeugbauteilen bzw. Strukturbauteilen werden sowohl größere als auch kleinere Bauteile wie beispielsweise Hohlprofile, Längsträger verstanden. Wie bereits oben stehend beschrieben, werden diese Fahrzeugbauteile/Strukturbauteile in einem Herstellverfahren aus Kunststoffen oder einem faserverstärkten Kunststoffmaterial gefertigt. Bei der Herstellung der Faserverbundwerkstoffe werden häufig Laminate gefertigt, die aus mehreren übereinander liegenden Faserhalbzeugen (Gewebe, Gelege, Matten, Vlies) mit unterschiedlicher Faserrichtung bestehen. Bekannte Verfahren sind Handlegeverfahren, bei denen Faserhalbzeuge in eine Werkzeugform eingelegt und mit Kunstharz getränkt und durch Anpressen entlüftet und anschließend ausgehärtet werden. Des Weiteren bekannt ist die Prepreg Technologie. Hier werden die vorgetränkten Fasermatten auf die Werkzeugform aufgelegt. Der Werkstoffverbund wird anschließend mittels Vakuumsack entlüftet und anschließend im Autoklaven unter Druck und Temperatur ausgehärtet. Anstelle eines laminaren Faserverbundbauteils kann als Fahrzeugbauteil auch ein Sandwichbauteil mit Kern hergestellt werden.

Ein weiteres Verfahren zur Herstellung von Kunststoffbauteilen sowie zur Herstellung von Faserverbundwerkstoffen ist das Spritzgussverfahren. Bei der Herstellung von Fahrzeugbauteilen aus einem Faserverbundwerkstoff wird das mit Fasern versetzte Kunststoffmaterial im Extruder aufgeschmolzen und in die Werkzeugform eingespritzt und ausgehärtet.

In vorteilhafter Weise kann dabei die Werkzeugform zur Herstellung der Fahrzeugbauteile nach einem der vorgenannten Verfahren derart ausgeführt sein, dass an vordefinierten Stellen an der das Fahrzeugbauteil bildenden Oberfläche Formgebungselemente in Form von Ausnehmungen, Vertiefungen, Erhebungen vorgesehen sind, wobei durch diese Formgebungselemente die Referenzpunkte am Fahrzeugbauteil gebildet werden. Eine weitere Möglichkeit zur Ausbildung derartiger Referenzpunkte am Fahrzeugbauteil ist das Einbringen von zusätzlichen Bauteilen in das noch flüssige Verbundmaterial. Die zusätzlichen Bauteile können als Einlegeteile, Inserts oder Onserts ausgebildet sein. Als Material für die zusätzlichen Bauteile kann beispielsweise Holz, Metall (bspw. Eisen oder Nichteisenmetalle), Kunststoff etc. verwendet werden. Ein Vorteil der oben genannten Bildung der Referenzpunkte bereits im Aushärtewerkzeug bzw. bei der formgebenden Herstellung des Faserverbundbauteils nach einem der vorgenannten Verfahren ist dabei, dass keine Strukturschwächung oder Strukturzerstörung bedingt durch nachträgliche zerspanende Bearbeitung wie z.B. nachträgliches Einbringen von Bohrungen im Bereich der Referenzpunkte erfolgt. Hierdurch wird eine Schwächung der im Bauteil vorhandenen Kraftlinien vermieden. Ebenso erfolgt die Bildung der Referenzpunkt ohne Zerstören oder Beschädigen der im Kunststoffmaterial allenfalls vorhandenen Fasern. Bei der Verwendung von zusätzlichen Bauteilen in die noch flüssige Matrix des Faserverbundwerkstoffes können sich die Fasern um die zusätzlichen Bauteile wickeln bzw. legen oder anlegen. Dies trifft insbesondere beim Drücken des zusätzlichen Bauteils in das noch weiche Faserverbundmaterial zu. Bei der Ausgestaltung der Referenzpunkte durch im Formwerkzeug vorgesehene Formgebungselemente wird ein Zerstören bzw. Beschädigen oder Reißen der Fasern verhindert, da das Kunststoffmaterial bei der Bildung der Referenzpunkte weich ist und die Fasern im weichen Verbund noch nachgeben können. Bei der Verwendung von Onserts wird ein zusätzliches Bauteil in einen im Formwerkzeug dafür vorgesehenen Hohlraum eingebracht und mit dem noch weichen Faserverbundbauteil mittels Formwerkzeug verpresst. Hierbei verbindet sich der Onsert mit dem Faserverbundbauteil bzw. wird mit diesem verklebt. Hierbei bleiben die Faserlagen unbeschädigt bzw. der Onsert wird auf die Faserschicht bzw. die Deckschicht geklebt, ohne die Fasern zu verdrängen bzw. ohne die Fasern nennenswert zu verdrängen und damit die Kraftflussrichtung nicht zu beeinflussen.

An dieser Stelle sei darauf hingewiesen, dass der Begriff Kunststoffmaterialien sowohl thermoplastische Kunststoffe wie Polypropylen, Polycarbonat, Polyethylen etc., als auch duroplastische Kunststoffe bzw. sowohl thermoplastische als auch duroplastische faserverstärkte Kunststoffe (Faserverbundwerkstoffe) umfasst. Als Faserverbundwerkstoffe werden Verbundwerkstoffe bzw. Werkstoffverbunde bezeichnet, die aus einem Matrixwerkstoff bzw. Matrixsystem mit eingebetteten Fasern besteht. Aufgrund dieses Verbundes kann die Zugfestigkeit der Fasern in Faserrichtung in Verbindung mit der Möglichkeit der Formgebung durch die Matrix genutzt werden. Als Matrixwerkstoff werden beispielsweise thermoplastische Kunststoffe wie Polypropylen (PP), Polyamid (PA), Polycarbonat (PC) oder auch duroplastische Kunststoffe wie Epoxidharz, ungesättigte Polyester (UP), Polyurethan (PUR) usw. verwendet. Als Fasern können Glasfasern, Kohlenstofffasern, Keramikfasern, Naturfasern, Textilfasern etc. eingesetzt werden. Faserverbundbauteile können dabei sowohl in Form von Laminaten bzw. verbundenen Laminatschichten als auch als Sandwichbauteile, mit unterschiedlichsten Kernen, ausgeführt sein. Hierbei sind die Deckschichten aus einem Faserverbundwerkstoff und die Kernschicht kann beispielsweise ein Waben- od. Schaummaterial beispielsweise aus Polyurethan (PUR) bestehen. Das Kernmaterial kann bspw. aus Kunststoff, Papier od. Metallen bestehen. Bei Verwendung von Wabenkernen kommen alle Wabenformen in Frage bspw. bienenwabenförmig, rechteckig, quadratisch, rund, vieleckig, wellenförmig etc.

Diese Referenzpunkte sind bevorzugt als Kerben, Rillen, Sicken, Erhebungen, Einprägungen, Ausnehmungen oder dergleichen ausgeführt, aber auch durch zusätzliche Bauteile wie Einlegeteile, Inserts oder Onserts.

Weitere vorteilhafte Ausgestaltungen und Weiterbildungen des erfindungsgemäßen Verfahrens zur Herstellung und/oder Montage von Fahrzeugbauteilen, Strukturbauteilen aus einem Kunststoffmaterial ergeben sich aus den Unteransprüchen.

Bevorzugte Ausführungsformen des Verfahrens werden beispielshalber beschrieben, wobei veranschaulichend auf die beigefügten Zeichnungen Bezug genommen wird.

Es zeigt:
- Fig. 1: ein Fahrzeugbauteil mit Referenzpunkten in einer Ansicht,
- Fig. 2: einen Ausschnitt eines Querschnitts durch ein Formwerkzeug bei der Herstellung eines mehrschichtigen Fahrzeugbauteils in einer ersten Ausführungsform, wobei die Referenzpunkte durch Verprägung ausgebildet werden,
- Fig. 3: einen Ausschnitt eines Querschnitts durch ein Formwerkzeug bei der Herstellung eines mehrschichtigen Fahrzeugbauteils in einer zweiten Ausführungsform, wobei die Referenzpunkte durch Inserts ausgebildet werden,
- Fig. 4: einen Ausschnitt eines Querschnitts durch ein Formwerkzeug bei der Herstellung eines mehrschichtigen Fahrzeugbauteils in einer dritten Ausführungsform, wobei die Referenzpunkte durch Einlegeteile ausgebildet werden,
- Fig. 5: einen Ausschnitt eines Querschnitts durch ein Formwerkzeug bei der Herstellung eines mehrschichtigen Fahrzeugbauteils in einer vierten Ausführungsform, wobei die Referenzpunkte durch Onserts ausgebildet werden; und
- Fig. 6: einen Ausschnitt eines Querschnitts durch ein Formwerkzeug bei der Herstellung eines mehrschichtigen Fahrzeugbauteils in einer fünften Ausführungsform, wobei die Referenzpunkte durch Onserts ausgebildet werden.

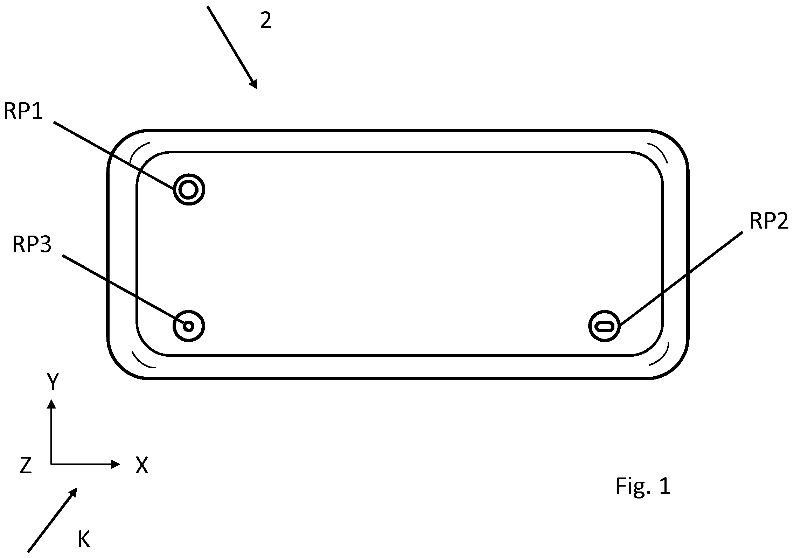

Das in der Figur 1 dargestellte Fahrzeugbauteil 2 ist als flächiges Formteil ausgestaltet, und weist eine durch das jeweilige Design vorgegebene dreidimensionale Oberflächengestaltung auf. Das Fahrzeugbauteil 2 umfasst entsprechend ausgebildete Referenzpunkte RP1, RP2 und RP3 des vordefinierten Bezugspunktsystems RPS. Die Referenzpunkte sind dabei als kreisförmige Vertiefungen ausgeführt, wobei in der Vertiefung jeweils eine zusätzliche Vertiefung ausgeführt ist. Der Referenzpunkt RP1 weist als zusätzliche Vertiefung eine weitere kreisförmige Vertiefung mit einem kleineren Durchmesser auf. Durch den RP1 wird die X, Y, Z Richtung definiert. Der Referenzpunkt RP2 weist als zusätzliche Vertiefung eine Vertiefung in Form eines Langloches auf. Durch den RP2 werden die X, Z oder Y, Z Richtung definiert. Der Referenzpunkt RP3 weist als zusätzliche Vertiefung eine kleine, runde Kerbe auf. Durch den RP3 wird die Z-Richtung definiert. Die X, Y, Z Richtung sind durch das Koordinatensystem K festgelegt.

Durch die oben genannten Referenzpunkte RP1, RP2 und RP3 ist eine eindeutige Positionierung der zu montierenden Bauteile zueinander sowie der Bauteile im Gesamtfahrzeug gewährleistet.

Die Fahrzeugbauteile sind aus einem Kunststoffmaterial ausgeführt und können beispielsweise in einem bekannten Spritzgießverfahren hergestellt werden.

Zur Herstellung des Fahrzeugbauteils 2 wird dabei ein Spritzgießwerkzeug, welches eine obere und untere Werkzeughälfte umfasst, eingesetzt. Bei diesem bekannten Spritzgießverfahren, welches zeichnerisch nicht dargestellt ist, werden in einem ersten Verfahrensschritt die Werkzeughälften (Ober- und Unterwerkzeug) zusammengefahren, so dass eine geschlossene Kavität entsteht. In die Kavität wird anschließend in einem weiteren Verfahrensschritt mittels einer Anzahl Einspritzdüsen der plastifizierte faserverstärkte Kunststoff eingespritzt. Das Ausbilden des Trägerbauteils 2 erfolgt bei hohen Temperaturen (materialabhängig beispielsweise bei Polypropylen bei 240 Grad) und einem Druck, der in Abhängigkeit des Materials, des Fließweges und der Wandstärke ausgewählt wird (bei Polypropylen ca. 600 bar). Hierdurch verteilt sich der Kunststoff in der Kavität. Das Ober.- und/oder Unterwerkzeug ist dabei an den am Fahrzeugbauteil auszubildenden vordefinierten Oberflächenbereichen mit Formgebungselementen ausgeführt. Diese Formgebungselemente sind z.B. Erhebungen, Vertiefungen, Einprägungen bzw. Verprägungen, Dome etc., die beim oben beschriebenen Spritzgießen an vordefinierten Stellen am Fahrzeugbauteil eine Ausbildung von Referenzpunkten in Form von Ausnehmungen, Erhebungen, etc. bewirkt. Anstelle der Ausbildung von Formgebungselementen im Bereich der Werkzeugform, können auch zusätzliche Bauteile wie Einleger, Inserts oder Onserst an den vordefinierten Stellen im Werkzeug positioniert werden.

In einem alternativen Herstellverfahren wird ein mehrschichtiges Fahrzeugbauteils 2 mit Referenzpunkten gefertigt. Zur Herstellung des Fahrzeugbauteils 2 wird zunächst ein Kernmaterial 3 auf der Ober und Unterseite entweder mit trockenen Fasermatten 4a, 4b belegt bzw. ummantelt und mit einem Matrixwerkstoff getränkt, besprüht und oder benetzt, oder mit Prepregs bzw. vorimpregnierten Faserhalbzeugen belegt. Anschließend wird der Stapel, bzw. auch das sogenannte Layup, in einem, bevorzugt beheiztem, ein- oder mehrteiligen Formpresswerkzeug formgepresst und vorzugsweise im Werkzeug ausgehärtet.

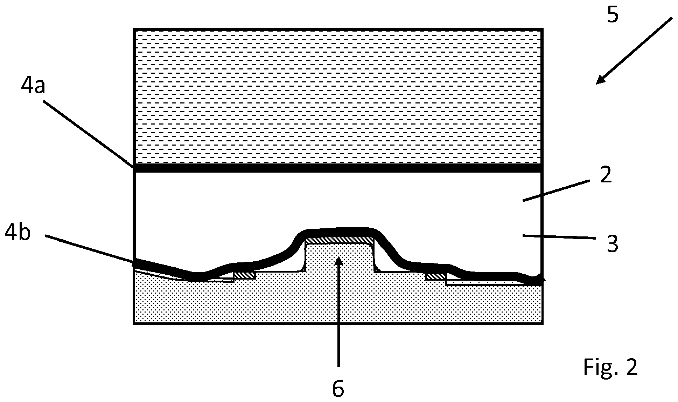

In der Figur 2 ist der eingelegte Stapel bzw. das Layup aus Fasermatten 4a, 4b und Kernschicht 3 beim Verpressen in einer Werkzeugform 5 gezeigt. Die Werkzeugform 5 weist hierbei eine obere Werkzeughälfte 5a und eine untere Werkzeughälfte 5b auf. Wie es aus der Figur 2 ersichtlich ist, weist die untere Werkzeughälfte 5b vordefinierten Oberflächenbereichen mit Formgebungselementen 6 auf. Diese Formgebungselemente sind in dem Ausführungsbeispiel als Erhebungen ausgeführt und weisen im Querschnitt eine zinnenartige Geometrie auf. Wie es aus der Schnittdarstellung ersichtlich ist, legen sich die Fasern der unteren Fasermatte 4a beim Verpressen des Faserverbundbauteils an den Kanten der unteren Werkzeugform 5b im Bereich der Formgebungselemente 6 an, werden hierbei aber nicht beschädigt. An dem korrespondierenden Oberflächenbereich des Faserverbundbauteils / Fahrzeugbauteils 2 bilden sich somit die vordefinierten Referenzpunkte aus.

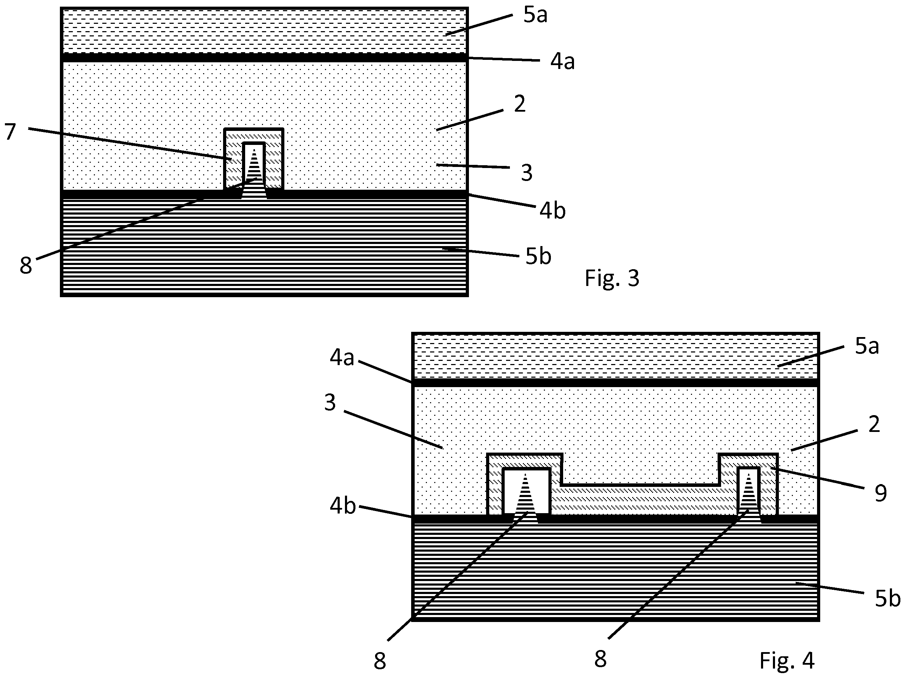

Figur 3 zeigt einen Ausschnitt eines Querschnitts durch ein Formwerkzeug mit oberer und unterer Werkzeughälfte 5a, 5b bei der Herstellung eines mehrschichtigen Fahrzeugbauteils 2 / Faserverbundbauteils in einer zweiten Ausführungsform, wobei die Referenzpunkte durch Inserts 7 ausgebildet werden. Wie es aus der Darstellung ersichtlich ist, werden die Inserts 7 in die Werkzeugform zusätzlich zu dem zu verpressenden Stapel/Layup aus Decklagen 4a, 4b und Kernschicht 5 mit eingelegt. Eine Positionierung der Inserts erfolgt hierbei über in der Werkzeugform angeordneter Positionsdorne 8. Die Inserts 7 werden beim Verpressen in das mehrschichtige Fahrzeugbauteil gedrückt. Die Faserlage wird an dieser Stelle lokal verschoben jedoch nicht unterbrochen.

Figur 4 zeigt einen Ausschnitt eines Querschnitts durch ein Formwerkzeug mit oberer und unterer Werkzeughälfte bei der Herstellung eines mehrschichtigen Fahrzeugbauteils/ Fahrzeugbauteils in einer dritten Ausführungsform, wobei die Referenzpunkte durch Einlegeteile 9 ausgebildet werden. Einlegeteile 9 sind dann vorteilhaft, wenn Anbindungspunkte mit größerer Festigkeit ins Fahrzeugbauteil 2 eingebracht werden müssen. Dies ist bei der Befestigung von Scharnieren, Schlössern und dergleichen erforderlich.

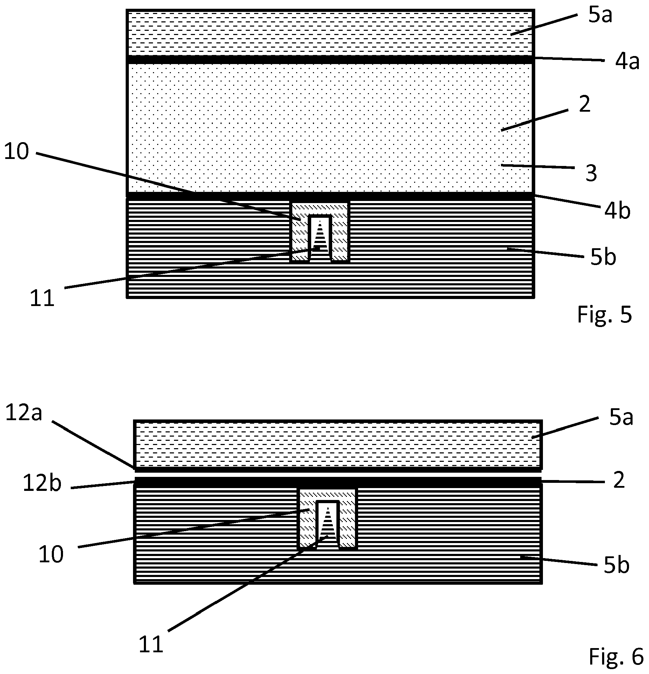

Figur 5 zeigt einen Ausschnitt eines Querschnitts durch ein Formwerkzeug mit oberer und unterer Werkzeughälfte 5a, 5b bei der Herstellung eines mehrschichtigen Fahrzeugbauteils 2 / Faserverbundbauteils in einer vierten Ausführungsform, wobei die Referenzpunkte durch Onserts 10 ausgebildet werden. Wie es aus der Darstellung ersichtlich ist, werden die Onserts 10 in Vertiefungen in der Werkzeugform mittels zusätzlicher Positionsdorne 11 positioniert. Zusätzlich zu den Onserts wird der zu verpressenden Stapel bzw. das zu verpressende Layup aus Decklagen 4a, 4b und Kernschicht 5 mit in die Werkzeugform eingelegt. Eine Positionierung der Onserts erfolgt hierbei über in der Werkzeugform angeordneter Positionsdorne 11. Die Onserts 10 werden dann beim Verpressen auf die Oberfläche des mehrschichtigen Fahrzeugbauteils 2 gedrückt und verkleben dort.

Figur 6 zeigt einen Ausschnitt eines Querschnitts durch ein Formwerkzeug mit oberer und unterer Werkzeughälfte 5a, 5b bei der Herstellung eines mehrschichtigen Fahrzeugbauteils 2 / Faserverbundbauteils in einer fünften Ausführungsform, wobei die Referenzpunkte durch Onserts 10 ausgebildet werden. Wie es aus der Darstellung ersichtlich ist, werden die Onserts 10 in Vertiefungen in der Werkzeugform mittels zusätzlicher Positionsdorne 11 positioniert. Zusätzlich zu den Onserts wird der zu verpressenden Stapel aus zwei Faserlagen 12a, 12b mit in die Werkzeugform eingelegt. Eine Positionierung der Onserts erfolgt hierbei über in der Werkzeugform angeordneter Positionsdorne 11. Die Onserts 10 werden dann beim Verpressen auf die Oberfläche des mehrschichtigen Fahrzeugbauteils 2 gedrückt und verkleben dort.

Wie es weiter obenstehend näher erläutert ist, können die Fahrzeugbauteile auch mittels anderer bekannter Herstellverfahren gefertigt werden. Wesentlich ist dabei, dass die Referenzpunkte in Form von Ausnehmungen, Erhebungen, Einprägungen, zusätzlichen Bauteilen wie Einlegern, Inserts oder Onserts bereits im Aushärtewerkzeug (Werkzeugform) bzw. bei der formgebenden Herstellung des Fahrzeugbauteils aus dem eigentlichen Kunststoffmaterial, insbesondere dem eigentlichen Faserverbundwerkstoff selbst erzeugt werden.

## Patentansprüche

1. Verfahren zur Herstellung von Fahrzeugbauteilen (2) und/oder Strukturbauteilen aus einem Kunststoffmaterial, wobei das Kunststoffmaterial ein Faserverbundwerkstoff ist, wobei die Fahrzeugbauteile (2) als flächige Formteile ausgestaltet sind, wobei die Fahrzeugbauteile bzw. Strukturbauteile zur Positionierung bei der Herstellung und/oder Positionierung bei der Montage mit weiteren Fahrzeugbauteilen und/oder Positionierung im Kraftfahrzeug ein Bezugspunktsystem (RPS) aufweisen, wobei dieses durch eine Vielzahl von Referenzpunkten (RP1, RP2, RP3) gebildet wird, wobei die Referenzpunkte als kreisförmige Vertiefungen ausgeführt sind, wobei in der Vertiefung jeweils eine zusätzliche Vertiefung ausgeführt ist, wobei ein erster Referenzpunkt (RP1) als zusätzliche Vertiefung eine weitere kreisförmige Vertiefung mit einem kleineren Durchmesser auf weist, wobei ein zweiter Referenzpunkt (RP2) als zusätzliche Vertiefung eine Vertiefung in Form eines Langloches aufweist, wobei ein dritter Referenzpunkt (RP3) als zusätzliche Vertiefung eine kleine, runde Kerbe aufweist, wobei die Referenzpunkte (RP1, RP2, RP3) des Bezugspunktsystems bei der formgebenden Herstellung des Fahrzeugbauteils erzeugt werden, in einer Werkzeugform zur Herstellung der Fahrzeugbauteile (2) und Strukturbauteile (5).

2. Verfahren zur Herstellung und Montage von Fahrzeugbauteilen und Strukturbauteilen nach Anspruch 2, **dadurch gekennzeichnet dass** zur Erzeugung der Referenzpunkte (RP1, RP2, RP3) am Fahrzeugbauteil (2) die Werkzeugform (5) mit Formgebungselementen (6) ausgeführt ist, wobei die Formgebungselemente (6) in Form von Erhebungen, Vertiefungen, Einprägungen, Dome etc. ausgebildet sind.

3. Verfahren zur Herstellung und Montage von Fahrzeugbauteilen (2) und Strukturbauteilen nach Anspruch 2, **dadurch gekennzeichnet, dass** zur Erzeugung der Referenzpunkte (RP1, RP2, RP3) am Fahrzeugbauteil zusätzliche Bauteile wie vorzugsweise Inserts (7), Einlegeteile (9) oder Onserts (10) in der Werkzeugform (5) positioniert werden.

4. Verfahren zur Herstellung und Montage von Fahrzeugbauteilen und Strukturbauteilen nach Anspruch 4, **dadurch gekennzeichnet, dass** die zusätzlichen Bauteile aus Holz, Metall, Kunststoffmaterialien bestehen.

5. Verfahren zur Herstellung und Montage von Fahrzeugbauteilen und Strukturbauteilen nach Anspruch 4, **dadurch gekennzeichnet, dass** die Fahrzeugbauteile (2) aus Faserverbundwerkstoffen als Laminate oder Sandwichbauteile hergestellt werden.

6. Fahrzeugbauteil (2) oder Strukturbauteil aus einem Kunststoffmaterial, welches nach einem der Ansprüche 1-5 hergestellt ist, wobei das Fahrzeugbauteil (2) als flächiges Formteil ausgestaltet ist, wobei das Fahrzeugbauteil (2) bzw. Strukturbauteil zur Positionierung bei der Herstellung und/oder Positionierung bei der Montage mit weiteren Fahrzeugbauteilen und/oder Positionierung im Kraftfahrzeug ein Bezugspunktsystem (RPS) aufweist, wobei dieses durch eine Vielzahl von Referenzpunkten (RP1, RP2, RP3) gebildet wird, wobei die Referenzpunkte als kreisförmige Vertiefungen ausgeführt sind, wobei in der Vertiefung jeweils eine zusätzliche Vertiefung ausgeführt ist, wobei ein erster Referenzpunkt (RP1) als zusätzliche Vertiefung eine weitere kreisförmige Vertiefung mit einem kleineren Durchmesser auf weist, wobei ein zweiter Referenzpunkt (RP2) als zusätzliche Vertiefung eine Vertiefung in Form eines Langloches aufweist, wobei ein dritter Referenzpunkt (RP3) als zusätzliche Vertiefung eine kleine, runde Kerbe auf weist.

7. Fahrzeugbauteil (2) nach Anspruch 6, **dadurch gekennzeichnet, dass** das Fahrzeugbauteil (2) bzw. Strukturbauteil ein Laminat aus Faserverbundwerkstoffen oder ein Sandwichbauteil ist.

## Claims

1. Method for the production of vehicle components (2) and/or structural components from a plastics material, wherein the plastics material is a fibre composite material, wherein the vehicle components (2) are designed as planar shaped parts, wherein the vehicle components or structural components, for the positioning during production and/or positioning during assembly with further vehicle components, and/or positioning in the motor vehicle, have a reference point system (RPS), wherein this is formed by a multiplicity of reference points (RP1, RP2, RP3), wherein the reference points are realized as circular depressions, wherein in the depression is respectively realized an additional depression, wherein a first reference point (RP1) has as the additional depression a further circular depression of lesser diameter, wherein a second reference point (RP2) has as the additional depression a depression in the form of a long hole, wherein a third reference point (RP3) has as the additional depression a small, round notch, wherein the reference points (RP1, RP2, RP3) of the reference point system are created in the shaping production of the vehicle component, in a mould for the production of the vehicle components (2) and structural components.

2. Method for the production and assembly of vehicle components and structural components according to Claim 1, **characterized in that**, for the creation of the reference points (RP1, RP2, RP3) on the vehicle component (2), the mould (5) is realized with shaping elements (6), wherein the shaping elements (6) are configured in the form of elevations, depressions, impressions, domes etc.

3. Method for the production and assembly of vehicle components (2) and structural components according to Claim 2, **characterized in that**, for the creation of the reference points (RP1, RP2, RP3) on the vehicle component, additional components, such as preferably inserts (7), inlays (9) or onserts (10), are positioned in the mould (5).

4. Method for the production and assembly of vehicle components and structural components according to Claim 3, **characterized in that** the additional components consist of wood, metal, plastics materials.

5. Method for the production and assembly of vehicle components and structural components according to Claim 4, **characterized in that** the vehicle components (2) are manufactured from fibre composite materials as laminates or sandwich components.

6. Vehicle component (2) or structural component made from a plastics material, which is produced according to one of Claims 1-5, wherein the vehicle component (2) is designed as a planar shaped part, wherein the vehicle component (2) or structural component, for the positioning during production and/or positioning during assembly with further vehicle components and/or positioning in the motor vehicle, has a reference point system (RPS), wherein this is formed by a multiplicity of reference points (RP1, RP2, RP3), wherein the reference points are realized as circular depressions, wherein in the depression is respectively realized an additional depression, wherein a first reference point (RP1) has as the additional depression a further circular depression of lesser diameter, wherein a second reference point (RP2) has as the additional depression a depression in the form of a long hole, wherein a third reference point (RP3) has as the additional depression a small, round notch.

7. Vehicle component (2) according to Claim 6, **characterized in that** the vehicle component (2) or structural component is a laminate of fibre composite materials or a sandwich component.

## Revendications

1. Procédé de fabrication de composants de véhicule (2) et/ou de composants structuraux en matière synthétique, la matière synthétique étant un matériau composite renforcé par des fibres, les composants de véhicule (2) étant conçus sous la forme de pièces moulées sensiblement bidimensionnelles, les composants de véhicule ou les composants structuraux comportant un système de points de référence (RPS) servant au positionnement lors de la fabrication et/ou au positionnement lors de l'assemblage avec d'autres composants de véhicule et/ou au positionnement dans le véhicule automobile, ce système de points de référence étant formé par un grand nombre de points de référence (RP1, RP2, RP3), les points de référence étant conçus sous la forme de creux circulaires, un creux supplémentaire étant créé dans chaque creux, un premier point de référence (RP1) comportant comme creux supplémentaire un autre creux circulaire de plus petit diamètre, un deuxième point de référence (RP2) comprenant comme creux supplémentaire un creux se présentant sous la forme d'un trou oblong, un troisième point de référence (RP3) comportant comme creux supplémentaire une petite rainure ronde, les points de référence (RP1, RP2, RP3) du système de points de référence étant générés lors de la fabrication par formage du composant de véhicule, dans un moule destiné à fabriquer les composants de véhicule (2) et les composants structuraux.

2. Procédé de fabrication et d'assemblage de composants de véhicule et de composants structuraux selon la revendication 1, **caractérisé en ce que**, pour générer les points de référence (RP1, RP2, RP3) au niveau su composant de véhicule (2), le moule (5) est conçu avec des éléments de formage (6), les éléments de formage (6) étant conçus sous la forme d'élévations, de creux, d'indentations, de dômes, etc.

3. Procédé de fabrication et d'assemblage de composants de véhicule (2) et de composants structuraux selon la revendication 2, **caractérisé en ce que** des composants supplémentaires, tels que des inserts (7), des éléments d'insertion (9) ou des éléments Onserts (10) sont positionnés dans le moule (5) pour générer les points de référence (RP1, RP2, RP3) au niveau du composant de véhicule.

4. Procédé de fabrication et d'assemblage de composants de véhicules et de composants structuraux selon la revendication 3, **caractérisé en ce que** les composants supplémentaires sont en bois, en métal, en matières synthétiques.

5. Procédé de fabrication et d'assemblage de composants de véhicule et de composants structuraux selon la revendication 4, **caractérisé en ce que** les composants de véhicule (2) sont en des matériaux composites fibreux tels que des stratifiés ou des composants en sandwich.

6. Composant de véhicule (2) ou composant structural en matière synthétique fabriqué selon l'une des revendications 1 à 5, l'élément de véhicule (2) étant conçu comme une pièce moulée sensiblement bidimensionnelle, le composant de véhicule (2) ou le composant structural comportant un système de points de référence (RPS) destiné au positionnement lors de la fabrication et/ou au positionnement lors de l'assemblage avec d'autres composants de véhicule et/ou au positionnement dans le véhicule automobile, ce système de points de référence étant formé par un grand nombre de points de référence (RP1, RP2, RP3), les points de référence étant conçus comme des creux circulaires, un creux supplémentaire étant créé dans chaque creux, un premier point de référence (RP1) comportant comme creux supplémentaire un autre creux circulaire de plus petit diamètre, un deuxième point de référence (RP2) comportant comme creux supplémentaire un creux se présentant sous la forme d'un trou oblong, un troisième point de référence (RP3) comportant comme creux supplémentaire une petite rainure arrondie.

7. Composant de véhicule (2) selon la revendication 6, **caractérisé en ce que** le composant de véhicule (2) ou le composant structural est un stratifié de matériaux composites renforcés par des fibres ou un composant en sandwich.
